(19) Europäisches Patentamt / European Patent Office / Office européen des brevets

(11) **EP 4 443 552 A1**

(12) **EUROPEAN PATENT APPLICATION**
published in accordance with Art. 153(4) EPC

(43) Date of publication:
**09.10.2024 Bulletin 2024/41**

(21) Application number: **22901880.9**

(22) Date of filing: **02.12.2022**

(51) International Patent Classification (IPC):
**H01M 4/36** (2006.01)    **H01M 4/38** (2006.01)
**H01M 4/587** (2010.01)    **H01M 4/62** (2006.01)
**C01B 33/02** (2006.01)    **H01M 10/052** (2010.01)
**H01M 4/02** (2006.01)

(52) Cooperative Patent Classification (CPC):
**C01B 33/02; H01M 4/02; H01M 4/36; H01M 4/38;
H01M 4/587; H01M 4/62; H01M 10/052;
Y02E 60/10**

(86) International application number:
**PCT/KR2022/019538**

(87) International publication number:
**WO 2023/101522 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.12.2021 KR 20210171337**

(71) Applicant: **Daejoo Electronic Materials Co., Ltd.
Siheung-si, Gyeonggi-do 15094 (KR)**

(72) Inventors:
• **LEE, Jung Hyun
  Siheung-si, Gyeonggi-do 15094 (KR)**

• **LIM, Sung Woo
  Siheung-si, Gyeonggi-do 15094 (KR)**
• **PARK, Han Jin
  Siheung-si, Gyeonggi-do 15094 (KR)**
• **NAM, Sang Jin
  Siheung-si, Gyeonggi-do 15094 (KR)**
• **LIM, Hyun Hee
  Siheung-si, Gyeonggi-do 15094 (KR)**
• **LIM, Jong Chan
  Siheung-si, Gyeonggi-do 15094 (KR)**

(74) Representative: **HGF
HGF Limited
1 City Walk
Leeds LS11 9DX (GB)**

(54) **POROUS SILICON-CARBON COMPOSITE, PREPARING METHOD THEREFOR, AND ANODE ACTIVE MATERIAL COMPRISING SAME**

(57) The present invention relates to a porous silicon-carbon composite having a core-shell structure, a preparing method therefor, and an anode active material comprising same, wherein the core comprises silicon particles and the shell comprises two or more carbon layers including a first carbon layer and a second carbon layer, so that the application of the composite as an anode active material for a secondary battery can enhance the discharge capacity, initial efficiency, and capacity retention rate of the secondary battery. In addition, the preparing method for the porous silicon-carbon composite having the core-shell structure enables the mass production through a continuous process with minimized steps.

[Fig. 1]

## Description

### Technical Field

The present invention relates to a porous silicon-carbon composite having a core-shell structure, to a method for preparing the same, and to a negative electrode active material comprising the same.

### Background Art

In recent years, as electronic devices become smaller, lighter, thinner, and more portable in tandem with the development of the information and communication industry, the demand for a high energy density of batteries used as power sources for these electronic devices is increasing. A lithium secondary battery is a battery that can best meet this demand, and research on small batteries using the same, as well as the application thereof to large electronic devices such as automobiles and power storage systems, is being actively conducted.

Carbon materials are widely used as a negative electrode active material for such a lithium secondary battery. Silicon-based negative electrode active materials are being studied in order to further enhance the capacity of batteries. Since the theoretical capacity of silicon (4,199 mAh/g) is greater than that of graphite (372 mAh/g) by 10 times or more, a significant enhancement in the battery capacity is expected.

The reaction scheme when lithium is intercalated into silicon is, for example, as follows:

$$[\text{Reaction Scheme 1}] \qquad 22Li + 5Si = Li_{22}Si_5$$

In a silicon-based negative electrode active material according to the above reaction scheme, an alloy containing up to 4.4 lithium atoms per silicon atom with a high capacity is formed. However, in most silicon-based negative electrode active materials, volume expansion of up to 300% is induced by the intercalation of lithium, which destroys the negative electrode, making it difficult to exhibit high cycle characteristics.

In addition, this volume change may cause cracks on the surface of the negative electrode active material, and an ionic material may be formed inside the negative electrode active material, thereby causing the negative electrode active material to be electrically detached from the current collector. This electrical detachment phenomenon may significantly reduce the capacity retention rate of a battery.

In order to solve this problem, Japanese Patent No. 4393610 discloses a negative electrode active material in which silicon and carbon are mechanically processed to form a composite, and the surfaces of the silicon particles are coated with a carbon layer using chemical vapor deposition (CVD). In addition, Japanese Laid-open Patent Publication No. 2016-502253 discloses a negative electrode active material comprising silicon-based particles and carbon particles, wherein the carbon particles comprise fine carbon particles and coarse-grained carbon particles having different average particle diameters.

However, although these prior art documents relate to a negative electrode active material comprising silicon and carbon, there is a limit to suppressing the volume expansion and contraction during charging and discharging. Thus, there is still a demand for research to solve these problems.

[Prior art documents]

[Patent documents]

(Patent Document 1) Japanese Patent No. 4393610
(Patent Document 2) Japanese Laid-open Patent Publication No. 2016-502253
(Patent Document 3) Korean Laid-open Patent Publication No. 2018-0106485

### Disclosure of Invention

### Technical Problem

An object of the present invention is to provide a porous silicon-carbon composite capable of enhancing the discharge capacity, initial efficiency, and capacity retention rate of a secondary battery at the same time.

Another object of the present invention is to provide a method for preparing the porous silicon-carbon composite.

Still another object of the present invention is to provide a negative electrode active material comprising the porous silicon-carbon composite and a lithium secondary battery comprising the same.

**Solution to Problem**

The present invention provides a porous silicon-carbon composite, which has a core-shell structure comprising silicon particles and carbon, wherein the core comprises the silicon particles, and the shell comprises two or more carbon layers comprising a first carbon layer and a second carbon layer.

In addition, the present invention provides a method for preparing the porous silicon-carbon composite, which comprises a first step of etching a silicon-based raw material powder using an etching solution containing a fluorine (F) atom-containing compound; a second step of filtering and drying the product obtained by the etching to prepare a porous silicon structure; a third step of forming a first carbon layer on the surface of the porous silicon structure; and a fourth step of forming a second carbon layer on the surface of the first carbon layer to obtain a porous silicon-carbon composite having a core-shell structure.

In addition, the present invention provides a negative electrode active material comprising the porous silicon-carbon composite.

Further, the present invention provides a lithium secondary battery comprising the negative electrode active material.

**Advantageous Effects of Invention**

The porous silicon-carbon composite according to an embodiment of the present invention has a core-shell structure, wherein the core comprises silicon particles, and the shell comprises two or more carbon layers comprising a first carbon layer and a second carbon layer. As a result, when it is applied to a negative electrode active material of a secondary battery, it is possible to enhance the initial charge and discharge efficiency, charge and discharge capacity, and capacity retention rate of the lithium secondary battery at the same time.

The method for preparing a porous silicon-carbon composite has an advantage in that mass production is possible through a continuous process with minimized steps.

**Brief Description of Drawings**

Fig. 1 shows a schematic diagram illustrating a simplified cross-section of the structure of a porous silicon-carbon composite in which a first carbon layer and a second carbon layer are sequentially disposed on a core, according to an embodiment of the present invention.

Fig. 2 shows the measurement results of an X-ray diffraction analysis of the porous silicon-carbon composite of Example 1.

Fig. 3(A) shows the results of a Raman spectroscopy analysis of a porous silicon structure of Example 1 with a first carbon layer formed. Fig. 3(B) shows the results of a Raman spectroscopy analysis of a porous silicon-carbon composite of Example 1 comprising two carbon layers.

**Best Mode for Carrying Out the Invention**

The present invention is not limited to what is disclosed below. Rather, it may be modified in various forms as long as the gist of the invention is not altered.

In this specification, when a part is referred to as "comprising" an element, it is to be understood that the part may comprise other elements as well, unless otherwise indicated.

In this specification, when one component is described as being formed on or under another component, it means that one component is formed directly on or under the other component, or indirectly through another component.

Meanwhile, in this specification, such terms as first carbon layer, second carbon layer, or first and second are used to describe various components, and the components are not limited by the terms. The above terms are used only for the purpose of distinguishing one component from another.

In addition, all numbers and expressions related to the quantities of components, reaction conditions, and the like used herein should be understood as it can be modified by the term "about," unless otherwise indicated.

In addition, the size of each component in the drawings may be exaggerated for explanation and does not mean the actual size. In addition, the same reference numerals refer to the same elements throughout the specification.

**[Porous silicon-carbon composite]**

The porous silicon-carbon composite according to an embodiment of the present invention has a core-shell structure comprising silicon particles and carbon, wherein the core comprises silicon particles, and the shell comprises two or more carbon layers comprising a first carbon layer and a second carbon layer.

In the porous silicon-carbon composite having a core-shell structure according to an embodiment, the core comprises silicon particles, and the shell comprises two or more carbon layers comprising a first carbon layer and a second carbon layer. As a result, when it is applied to a negative electrode active material of a secondary battery, it is possible to enhance the initial charge and discharge efficiency, charge and discharge capacity, and capacity retention rate of the secondary battery at the same time.

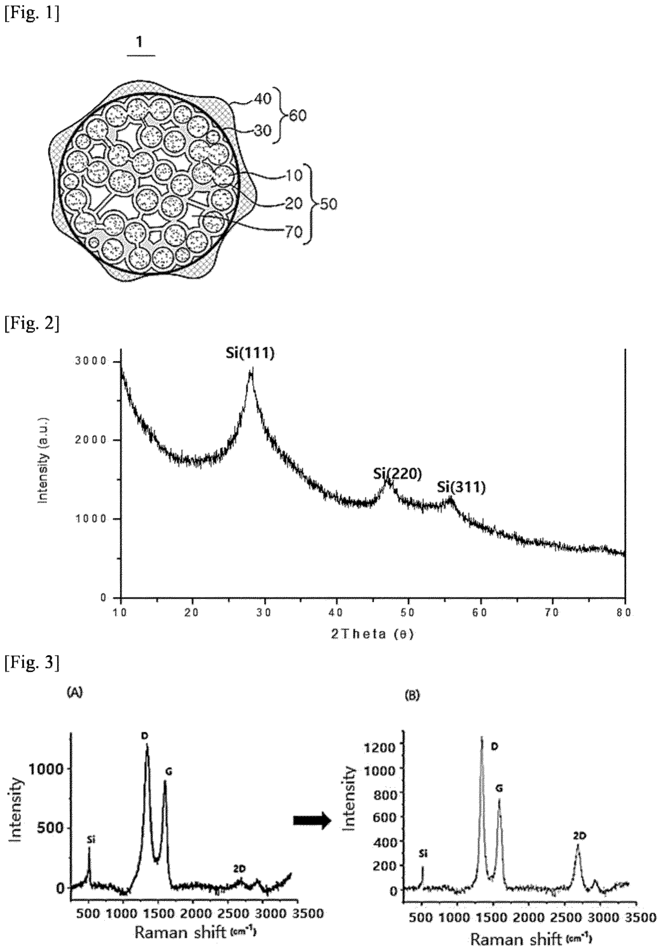

Fig. 1 shows a schematic diagram illustrating a simplified cross-section of the structure of a porous silicon-carbon composite in which a first carbon layer and a second carbon layer are sequentially disposed on a core, according to an embodiment of the present invention.

Specifically, referring to Fig. 1, the porous silicon-carbon composite (1) according to an embodiment of the present invention comprises a core (50) comprising silicon particles (10), pores (70), and carbon (20); and a shell (60) in which a first carbon layer (30) formed on the core and a carbon second layer (40) formed on the surface of the first carbon layer (30) are sequentially disposed.

The first carbon layer (30) may be formed on the surface of the core (50). In addition, when the first carbon layer (30) is formed by, for example, chemical vapor deposition (CVD), the carbon (20) may be inserted into the pores, or the carbon (20) may be formed on the surface of closed pores (70), or the carbon (20) may be present on the surface of the silicon particles (10), or the carbon (20) may serve as a matrix while the silicon particles (10) and the pores (70) may be present as uniformly distributed within the carbon matrix. In addition, the pores (70) in the core (50) may be communicated with each other to form open pores, and the carbon (20) may be inserted into the open pores.

Hereinafter, the configuration of the porous silicon-carbon composite will be described in detail.

**Core**

The porous silicon-carbon composite according to an embodiment of the present invention comprises a core, and the core comprises silicon particles.

In addition, the core may comprise a silicon aggregate in which the silicon particles are combined with each other.

In addition, in the central part of the core, the silicon particles may be distributed as connected to a silicon oxide compound.

Specifically, the core of the porous silicon-carbon composite may comprise a silicon aggregate having a three-dimensional (3D) structure in which two or more of the silicon particles are combined with each other. In such a case, the porous silicon-carbon composite has excellent mechanical properties such as strength. In addition, since it has a porous structure, it is possible to accommodate the volume expansion of silicon particles, as an active material, generated during the charging and discharging of a lithium secondary battery, thereby effectively alleviating and suppressing a problem caused by the volume expansion.

According to an embodiment of the present invention, the silicon aggregates, as an active material, may be uniformly distributed inside the core of the porous silicon-carbon composite, and silicon particles that are not combined with each other may be contained. The silicon particles and/or silicon aggregates may be uniformly distributed inside the core of the porous silicon-carbon composite. In such a case, excellent electrochemical properties such as charge and discharge may be achieved.

In addition, the porous silicon-carbon composite is a composite in which silicon aggregates, in which a plurality of silicon particles are combined with each other, are uniformly distributed in a composite whose structure is in the form of a single mass, for example, a polyhedral, spherical, or similar shape. It may be in a single structure in which carbon surrounds a part or all of the surfaces of one or more silicon particles or the surfaces of secondary silicon particles (silicon aggregates) formed by the aggregation of two or more silicon particles.

Since the silicon particles charge lithium, the capacity of a lithium secondary battery may be decreased if silicon particles are not employed. In particular, if it comprises a silicon aggregate in which silicon particles are combined with each other, excellent mechanical properties such as strength can be obtained. In addition, the porous silicon-carbon composite comprising the silicon particles may be easily dispersed when a negative electrode active material composition is prepared with a binder and a conductive material. When the negative electrode active material composition is applied on a current collector, its workability may be excellent.

The silicon particles may be crystalline or amorphous and specifically may be amorphous or in a similar phase thereto. If the silicon particles are crystalline, as the size of the crystallites is smaller, the density of the matrix may be enhanced and the strength may be fortified to prevent cracks. Thus, the initial efficiency or cycle lifespan characteristics of a secondary battery can be further enhanced. In addition, if the silicon particles are amorphous or in a similar phase thereto, the expansion or contraction during charging and discharging of a lithium secondary battery is small, and secondary battery performance such as capacity characteristics can be further enhanced.

Although the silicon particles have high initial efficiency and battery capacity, it is accompanied by a very complex crystal change by electrochemically absorbing, storing, and releasing lithium atoms. As the reaction of electrochemically absorbing, storing, and releasing lithium atoms proceeds, the composition and crystal structure of silicon may be changed to Si (crystal structure: Fd3m), LiSi (crystal structure: 141/a), $Li_2Si$ (crystal structure: C2/m), $Li_7Si_2$ (Pbam), $Li_{22}Si_{15}$ (F23), or the like. In addition, the volume of silicon may expand up to about 4 times (400%) according to the change in the complex crystal structure. Thus, as a charge and discharge cycle is repeated, silicon is destroyed, and a bond between lithium atoms and silicon is formed. As a result, the intercalation sites of lithium atoms that silicon initially had are damaged, which significantly reduces the cycle lifespan.

In the silicon-carbon composite according to an embodiment of the present invention, when it is subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, the crystallite size (crystallite size converted from measurements of X-ray diffraction analysis) of the silicon may be 1 nm to 20 nm, 1 nm to 15 nm, or 1 nm to 8 nm.

In addition, the silicon particles contained inside the core of the silicon-carbon composite may be in an amorphous form, a crystalline form having a crystallite size of 1 nm to 20 nm, or a mixture thereof. Although it is preferable that silicon is close to 100% amorphous, it is difficult to obtain completely amorphous silicon particles in the process; thus, the silicon particles may be a mixture of amorphous and crystalline forms. Even in such a case, the ratio of the amorphous form of silicon is preferably 50 % or more. If the silicon particles are amorphous, crystalline with a crystallite size in the above range, or a mixture thereof, cracking may be suppressed during the first charging and discharging of a secondary battery. If some cracks are generated during the first charging and discharging, these cracks become a starting point and propagate to lead to large cracks during repeated charging and discharging. Thus, if the silicon particles are outside the above range, a problem may arise in the performance of a secondary battery.

In addition, if the silicon particles are amorphous or crystalline with a crystallite size in the above range, damage due to the volume expansion by repeated charging and discharging can be mitigated.

If the crystallite size of the silicon particles is less than the above range, the charging and discharge capacity of a secondary battery may be reduced, and the properties of the material may change during storage due to increased reactivity, which may cause problems in the process.

In addition, if the crystallite size of the silicon particles is equal to, or greater than, the above lower limit, there is little concern that the charge and discharge capacity will be reduced. If the crystallite size of the silicon particles is equal to, or less than, the above upper limit, there is a low possibility that a region that does not contribute to discharging is generated; thus, it is possible to suppress a reduction in the Coulombic efficiency that stands for the ratio of charge capacity to discharge capacity.

In addition, when the silicon particles are fine particles, they preferably form a lithium alloy having a large specific surface area to thereby suppress the destruction of the bulk. The silicon fine particles react with lithium during charging to form $Li_{4.2}Si$ and return to silicon during discharging. In such an event, when X-ray diffraction is frequently performed on the silicon fine particles, the silicon shows a broad pattern, and its structure may be changed to amorphous silicon.

If the silicon particles are further pulverized within the above range to an amorphous state or a crystallite size of about 2 nm to 6 nm, the density of the matrix may be enhanced and the strength may be fortified to prevent cracks. Thus, the discharge capacity, initial efficiency, or cycle lifespan characteristics of a secondary battery can be further enhanced.

As the crystallite size of the silicon particles, as an active material, is made smaller within the above range, a denser composite can be obtained, which can enhance the strength of the matrix. Accordingly, in such a case, the performance of a lithium secondary battery such as discharge capacity, initial efficiency, or cycle lifespan characteristics can be further enhanced.

Meanwhile, in the porous silicon-carbon composite, the content of silicon (Si) in the core may be 30% by weight to 80% by weight, preferably, 40% by weight to 80% by weight, more preferably, 50% by weight to 70% by weight, based on the total weight of the porous silicon-carbon composite.

If the content of silicon (Si) is less than the above range, the amount of an active material for the occlusion and release of lithium is small, which may reduce the charge and discharge capacity of a lithium secondary battery. On the other hand, if it exceeds the above range, the charging and discharge capacity of a lithium secondary battery may be increased, whereas the expansion and contraction of the electrode during charging and discharging may be excessively increased, and the negative electrode active material powder may be further pulverized, which may deteriorate the cycle characteristics.

Meanwhile, the core of the porous silicon-carbon composite may comprise a plurality of pores inside the core. In such a case, it is possible to accommodate the volume expansion of silicon particles taking place during the charging and discharging of a secondary battery, thereby effectively alleviating and suppressing a problem caused by the volume expansion.

Specifically, since the porous silicon-carbon composite comprises pores inside the core, the volume expansion that takes place during the charging and discharging of a secondary battery is concentrated on the pores rather than the outer part of the negative electrode active material, thereby effectively controlling the volume expansion and enhancing the lifespan characteristics of a lithium secondary battery. In addition, the electrolyte can easily penetrate into the porous structure to enhance the output characteristics, so that the performance of a lithium secondary battery can be further enhanced.

In the present specification, pores may be used interchangeably with voids. In addition, the pores may comprise inner pores (also referred to as closed pores) and/or internal pores.

The inner pore refers to an independent pore that is not connected to other pores because the entire wall of the pore is closed to form a closed structure.

The internal pores comprise inner pores and open pores. At least a part of the wall of a pore may be open to form an open structure, so that it may be connected to other pores, or it may not be so. In addition, they may refer to pores exposed to the outside as they are disposed on the surface of the core.

The porous silicon-carbon composite according to an embodiment of the present invention may have a sea-island structure in which the silicon particles or inner pores form islands and carbon in the core forms a sea. The pores may comprise open pores or internal pores (i.e., comprising open pores and inner pores), while carbon may not be present inside the inner pores.

In addition, the core of the porous silicon-carbon composite may comprise carbon. That is, the carbon may be contained in the first carbon layer and the second carbon layer of the shell, respectively, and may be contained in at least a portion of the inside of the core.

Specifically, in the porous silicon-carbon composite, silicon particles as an active material and carbon may be uniformly distributed inside the core and/or firmly combined with each other to form a core.

In addition, the carbon may be present inside the pores and on the surface of the silicon particles, or the carbon may serve as a matrix while the silicon particles and the pores may be present as dispersed in the carbon matrix, or they may be present while comprising both. In addition, the carbon may be present on the surface of the silicon aggregates contained in the porous silicon-carbon composite.

According to an embodiment of the present invention, it is preferable that silicon particles and carbon are uniformly distributed inside the porous silicon-carbon composite. In addition, pores may be uniformly dispersed inside the porous silicon-carbon composite, which is confirmed through image observation of a dark field image or a bright field image by a transmission electron microscope (TEM).

Meanwhile, the core of the porous silicon-carbon composite according to an embodiment of the present invention may further comprise a silicon oxide compound. In addition, the silicon oxide compound may be contained in a greater amount towards the center of the core than the outer part of the core.

In such a case, it is possible to enhance the capacity and to reduce the volume expansion when applied to a secondary battery.

In the present invention, the silicon oxide compound may be represented by the formula $SiO_x$. Here, x may be $0.4 \leq x \leq 2$, preferably, $0.4 \leq x \leq 1.5$, more preferably, $0.4 \leq x \leq 1.2$.

In the formula $SiO_x$, if the value of x is less than the above range, expansion or contraction may be increased and lifespan characteristics may be deteriorated during the charging and discharging of a lithium secondary battery. In addition, if x exceeds the above range, there may be a problem in that the initial efficiency of a lithium secondary battery is decreased as the amount of inactive oxides increases.

The silicon oxide compound may be employed in an amount of 0.1% by weight to 5% by weight based on the total weight of the porous silicon-carbon composite.

If the content of the silicon oxide compound is less than the above range, the volume of a lithium secondary battery may expand, and the lifespan characteristics thereof may be deteriorated. If the content of the silicon oxide compound exceeds the above range, the initial irreversible reaction of a lithium secondary battery may be increased, thereby deteriorating the initial efficiency.

Meanwhile, the porous silicon-carbon composite according to an embodiment of the present invention may further comprise a silicon oxide ($SiO_x$, $0.1 < x \leq 2$) formed on the surface of the silicon particles. The silicon oxide ($SiO_x$, $0.1 < x \leq 2$) may be formed by oxidation of the silicon.

If a silicon oxide ($SiO_x$, $0.1 < x \leq 2$) formed on the surface of the silicon particles is further contained, the carbon may be present on the surface of the silicon oxide ($SiO_x$, $0.1 < x ::; 2$).

In the present specification, the disposition of the silicon particles and the characteristics of the surface thereof may cover the disposition of the silicon aggregates and the surface of the silicon aggregates within a range that does not impair the effects of the present invention. For example, unless otherwise stated, the silicon oxide ($SiO_x$, $0.1 < x \leq 2$) may also mean that formed on the surface of the silicon aggregates.

The content of oxygen (O) in the porous silicon-carbon composite may be 0.02% by weight to 25% by weight, preferably, 0.02% by weight to 10% by weight, more preferably, 0.02% by weight to 5% by weight, based on the total weight of the porous silicon-carbon composite. If the content of oxygen (O) in the porous silicon-carbon composite is less than the above range, the degree of expansion is increased during the charging of a lithium secondary battery, which deteriorates the cycle characteristics. If the content of oxygen (O) in the porous silicon-carbon composite exceeds the above range, when the porous silicon-carbon composite is used as a negative electrode active material, an irreversible reaction with lithium increases, which deteriorates the initial charge and discharge efficiency, it may be readily delaminated from the negative electrode current collector, and there may be a concern that the charge and discharge cycle characteristics are deteriorated.

Meanwhile, in general, as the ratio of oxygen decreases in a negative electrode active material that comprises silicon, the ratio of silicon particles as an active material increases, thereby increasing discharge capacity and discharge efficiency, whereas there may arise a problem in that cracks may be formed in the porous silicon-carbon composite by the volume expansion caused by the charging and discharging of the silicon particles. As a result, the cycle characteristics of a lithium secondary battery may be deteriorated.

In order to solve this problem, the core may comprise silicon dioxide.

Specifically, since the silicon dioxide is an inert material or an inert phase, it is effective in mitigating the volume expansion caused by the charging and discharging of silicon particles. The silicon dioxide is a component for forming a matrix in the porous silicon-carbon composite, which increases the mechanical strength of the matrix for preventing cracks due to volume expansion during charging and discharging of silicon particles to make it more robust and is effective in suppressing the formation of cracks.

Meanwhile, as the content of the silicon dioxide contained in the core of the porous silicon-carbon composite is optimized, it is possible to suppress a decrease in the initial capacity and initial efficiency of a lithium secondary battery and to enhance the cycle characteristics by increasing the strength of the matrix.

Specifically, according to an embodiment of the present invention, the porous silicon-carbon composite may comprise the silicon dioxide in an amount of 0.3% to 10% by weight, preferably, 0.5% by weight to 10% by weight, more preferably, 1% by weight to 8% by weight, even more preferably, 1% by weight to 6% by weight, based on the total weight of the porous silicon-carbon composite. If the content of the silicon dioxide is less than the above range, the effect of enhancing the cycle characteristics of a lithium secondary battery may be insignificant. If it exceeds the above range, the molar ratio (O/Si) of oxygen (O) atoms to silicon (Si) atoms in the porous silicon-carbon composite exceeds the above range, whereby cycle characteristics or discharge capacity may be deteriorated.

Meanwhile, the porous silicon-carbon composite according to an embodiment of the present invention may further comprise a magnesium compound.

Specifically, in the porous silicon-carbon composite, the core may further comprise a magnesium compound, and the magnesium compound may comprise a fluorine-containing magnesium compound, magnesium silicate, or a mixture thereof.

Since the magnesium compound hardly reacts with lithium ions during the charging and discharging of a secondary battery, it is possible to reduce the expansion and contraction of the electrode when lithium ions are occluded in the electrode, thereby enhancing the cycle characteristics of the secondary battery. In addition, the strength of the matrix, which is a continuous phase surrounding the silicon particles, can be fortified by the magnesium compound.

The magnesium compound may comprise a fluorine-containing magnesium compound.

The silicon particles may be present between the fluorine-containing magnesium compound particles and may be surrounded by the fluorine-containing magnesium compound particles.

In addition, the fluorine-containing magnesium compound does not release lithium ions during the charging of a lithium secondary battery. For example, it is also an inactive material that does not occlude or release lithium ions during the charging of a lithium secondary battery.

Lithium ions are released from the silicon particles, whereas lithium ions, which have been steeply increased during charging, are not released from the fluorine-containing magnesium compound. Thus, a porous matrix comprising a fluorine-containing magnesium compound does not participate in the chemical reaction of the battery, but it is expected to function as a body that suppresses the volume expansion of silicon particles during the charging of the secondary battery.

The fluorine-containing magnesium compound may comprise magnesium fluoride ($MgF_2$), magnesium fluoride silicate ($MgSiF_6$), or a mixture thereof.

The magnesium compound may further comprise magnesium silicate, and the magnesium silicate may be contained in a greater amount in the center of the core.

The magnesium silicate may comprise $MgSiO_3$, $Mg_2SiO_4$, or a mixture thereof.

In particular, as the porous silicon-carbon composite comprises $MgSiO_3$, the Coulombic efficiency or capacity retention rate may be increased.

In the porous silicon-carbon composite, magnesium silicate may be converted to a fluorine-containing magnesium compound by etching.

For example, some, most, or all of the magnesium silicate may be converted to a fluorine-containing magnesium compound depending on the etching method or etching degree. More specifically, most of the magnesium silicate may be converted to a fluorine-containing magnesium compound.

Meanwhile, the content of magnesium (Mg) in the porous silicon-carbon composite may be 0.2% by weight to 20% by weight, preferably, 0.2% by weight to 15% by weight, more preferably, 0.2% by weight to 10% by weight, based on the total weight of the porous silicon-carbon composite. If the content of magnesium (Mg) in the porous silicon-carbon composite satisfies the above range, the initial efficiency of a secondary battery may be enhanced, and it may be advantageous in terms of the effect of enhancing charge and discharge capacity and cycle characteristics and handling stability.

**Shell**

The silicon-carbon composite according to an embodiment of the present invention comprises a shell comprising a carbon layer (carbon film) on the surface of the core. In particular, the shell comprises at least two carbon layers comprising a first carbon layer and a second carbon layer.

According to an embodiment of the present invention, as the shell comprises at least two carbon layers on the surface of the core, the strength may be fortified, excellent electrical conductivity may be secured even after the electrode expands during charging and discharging, and side reactions with the electrolyte are suppressed, so that it is possible to enhance the charge and discharge capacity, initial charge and discharge efficiency, and capacity retention rate of a secondary battery.

Specifically, when the shell is composed of at least two carbon layers, even if cracks are formed on the surface of one of the carbon layers, it is possible to maintain the state in which the carbon layers are electrically connected until the other carbon layer without cracks is completely detached.

The first carbon layer may be present on the surface of the core. In addition, the first carbon layer may be present on the surface of the silicon particles and/or the silicon aggregates.

In addition, the shell has a structure that surrounds the core, wherein at least two carbon layers adopted therein, that is, at least two carbon layers comprising the first carbon layer and the second carbon layer, may produce an effect as a buffer layer (cushioning layer).

The buffer layer is effective as a mechanical buffer support surrounding the core. More specifically, the buffer layer may suppress the deterioration, cracking, and volume expansion of the core caused by the mechanical expansion of silicon during charging and discharging.

According to an embodiment of the present invention, the first carbon layer may comprise at least one selected from the group consisting of amorphous carbon, crystalline carbon, graphite, carbon nanofibers, chemical vapor graphene, and carbon nanotubes. Here, the chemical vapor graphene refers to graphene formed by chemical vapor deposition (CVD).

Specifically, the first carbon layer may comprise at least one selected from the group consisting of amorphous carbon, crystalline carbon, and chemical vapor graphene. For example, when the amorphous carbon or crystalline carbon is disposed on the core to form a first carbon layer, the strength of the first carbon layer is appropriately maintained, and the expansion of the core and the growth of silicon crystals in the core can be suppressed. In addition, when the crystalline carbon is disposed on the core to form a first carbon layer, the conductivity of a negative electrode active material can be further enhanced.

Meanwhile, the second carbon layer may comprise reduced graphene oxide (RGO), which has particularly high electrical conductivity. In such a case, when the porous silicon-carbon composite is used as a negative electrode active material, the contact resistance between the negative electrode active material layer and the current collector and between the negative electrode active material particles can be lowered, thereby enhancing the intercalation and detachment characteristics of lithium.

In particular, when the second carbon layer is reduced graphene oxide, it is possible to produce the effect as a barrier layer or a buffer layer against cracking.

The reduced graphene oxide in the second carbon layer may be formed by partially or substantially completely reducing graphene oxide.

In addition, the second carbon layer may further comprise graphite.

According to an embodiment of the present invention, in the silicon-carbon composite, a first carbon layer and a second carbon layer may be sequentially disposed on the core to form a shell.

The first carbon layer may be formed using chemical vapor deposition (CVD). The second carbon layer may be formed using one or more methods selected from a liquid coating method and a spray drying method.

Specifically, in the silicon-carbon composite, a first carbon layer may be formed on the core by chemical vapor deposition (CVD), and a second carbon layer comprising reduced graphene oxide may be subsequently formed on the first carbon layer using one or more methods selected from a liquid coating method and a spray drying method.

In addition, when the first carbon layer is formed, carbon (carbon layer) may be mainly formed in the pores in the core. As carbon is uniformly formed in the inner pores, it is possible to minimize the volume expansion of silicon during charging and discharging and the formation of large silicon particles caused by the sintering of nanosilicon by the volume expansion.

In the second carbon layer, reduced graphene oxide with good conductivity is coated, which makes it possible to adjust the content of carbon depending on the purposes, resulting in the advantages of low specific surface area, high conductivity, high capacity, and long lifespan.

According to an embodiment of the present invention, when a porous silicon-carbon composite in which at least two carbon layers are sequentially formed on all, most, or part of the surface of the core is used as a negative electrode active material, it is possible to suppress the release of lithium in the core and to suppress the volume change of silicon particles that occurs during the intercalation and detachment of lithium, thereby maintaining high conductivity and conduction path between particles of the negative electrode active material. As a result, it is possible to provide a negative electrode active material and a lithium secondary battery having high charge and discharge capacity and excellent cycle lifespan characteristics.

In addition, the at least two carbon layers for forming the shell may be deposited in various ways, as long as the desired effects of the present invention are not impaired. Up to 6 layers may be deposited. Specifically, the number of layers deposited for the shell may be 2 to 6. Specifically, the number of layers deposited for the shell may be 2 to 4 or 2 to 3.

When the porous silicon-carbon composite according to an embodiment of the present invention is applied as a negative electrode active material of a lithium secondary battery, the shell comprising the at least two carbon layers can play a very important role as a reaction barrier layer in the reaction between lithium and silicon in the core.

Specifically, the shell allows lithium to pass through, but prevents oxygen from passing through. It can prevent oxygen from reacting with silicon and/or a silicon oxide compound in the core. In addition, if the shell is uniformly coated to be formed on the core, there is an effect of suppressing cracking caused by stress due to the rapid volume expansion of silicon. Since cracks are formed irregularly and discontinuously, there is a possibility that the electrolyte does not come into contact with the inside of the negative electrode active material or that a portion that is electrically blocked may be present, which causes a defect in the secondary battery. In this regard, the role of the reduced graphene oxide of the second carbon layer is of significance. Since the reduced graphene oxide has high electrical conductivity, it is possible to maintain a state in which the carbon layers are electrically connected.

Meanwhile, the total content of carbon ($C_T$) in the porous silicon-carbon composite may be 20% by weight to 60% by weight based on the total weight of the silicon-carbon composite. In addition, the total content of carbon ($C_T$) in the porous silicon-carbon composite may be preferably 20% by weight to 50% by weight, more preferably, 25% by weight to 50% by weight, based on the total weight of the silicon-carbon composite.

The total content of carbon ($C_T$) in the porous silicon-carbon composite refers to the sum of the amount of carbon in the core (Co), the amount of carbon in the first carbon layer ($C_1$), and the amount of carbon in the second carbon layer ($C_2$).

If the total content of carbon ($C_T$) in the porous silicon-carbon composite is less than the above range, there may be a problem in that the effect of suppressing the volume expansion of a negative electrode active material and enhancing the conductivity thereof is insignificant. If it exceeds the above range, there may be a problem in that a thick carbon layer is formed by the excess carbon content, which may deteriorate the initial efficiency and capacity due to irreversibility, and that lithium ions may hardly be detached.

The sum of the amount of carbon in the core ($C_O$) and the amount of carbon in the first carbon layer ($C_1$) (Co + $C_1$) may be 20% by weight to 50% by weight, preferably, 20% by weight to 40% by weight, more preferably, 20% by weight to 35% by weight, based on the total weight of the silicon-carbon composite.

If the sum of the amount of carbon in the core ($C_O$) and the amount of carbon in the first carbon layer ($C_1$) (Co + $C_1$) is less than the above range, there may be a problem in that the effect of suppressing the volume expansion of a negative electrode active material and enhancing the conductivity thereof is insignificant. In addition, if the sum of the amount of carbon in the core ($C_O$) and the amount of carbon in the first carbon layer ($C_1$) (Co + $C_1$) exceeds the above range, there may be a problem in that the capacity of a secondary battery may decrease and that lithium ions may hardly be detached.

The amount of carbon in the second carbon layer ($C_2$) may be 0.5% by weight to 15% by weight, preferably, 1% by weight to 10% by weight, more preferably, 3% by weight to 10% by weight, based on the total weight of the silicon-carbon composite. If the content of carbon in the second carbon layer ($C_2$) is less than the above range, the effect of suppressing the volume expansion of a negative electrode active material and enhancing the conductivity thereof may be insignificant. In addition, if the content of carbon in the second carbon layer ($C_2$) exceeds the above range, there may be a problem in that the capacity of a secondary battery may decrease and that lithium ions may hardly be detached.

When the sum of the amount of carbon in the core ($C_O$) and the amount of carbon in the first carbon layer ($C_1$)

$(C_O + C_1)$, and the content of carbon in the second carbon layer $(C_2)$ each satisfy the above range, it may be more advantageous for achieving the effects desired in the present invention. If the sum of the amount of carbon in the core $(C_O)$ and the amount of carbon in the first carbon layer $(C_1)$ $(C_O + C_1)$, and the content of carbon in the second carbon layer $(C_2)$ each do not satisfy the above range, the initial efficiency of a secondary battery may be excessively deteriorated.

Meanwhile, the total thickness of the first carbon layer and the second carbon layer may be 5 nm to 200 nm, preferably, 10 nm to 100 nm, more preferably, 10 nm to 50 nm. If the total thickness of the first carbon layer and the second carbon layer satisfies the above range, even if the volume of the core is changed due to the intercalation and detachment of lithium, it is possible to effectively prevent or alleviate the pulverization of the core and to effectively prevent or alleviate side reactions between silicon and electrolyte, thereby enhancing the performance of the secondary battery.

Specifically, the thickness of the first carbon layer may be 2 nm to 100 nm, preferably, 2 nm to 30 nm, more preferably, 2 nm to 20 nm. If the thickness of the first carbon layer is less than the above range, the electrical conductivity of the first carbon layer is too low; thus, when it is applied to a negative electrode active material, there may be a problem in that the reactivity with the electrolyte is increased and the initial efficiency of a secondary battery is deteriorated. Further, the effect of suppressing the volume expansion of the silicon particles and the capacity enhancement may be insignificant, and a uniform coating may not be obtained. In addition, if the thickness of the first carbon layer exceeds the above range, the mobility of lithium ions may be hindered, which increases resistance, and the adhesive strength to the core may be deteriorated.

The thickness of the second carbon layer may be 1 nm to 100 nm, preferably, 2 nm to 20 nm, more preferably, 2 nm to 15 nm. If the thickness of the second carbon layer is less than the above range, the electrical conductivity of the second carbon layer is too low; thus, when it is applied to a negative electrode active material, there may be a problem that the reactivity with the electrolyte is increased, and the initial efficiency is deteriorated. In addition, the effect of suppressing the volume expansion of the silicon particles and the capacity enhancement may be insignificant, and a uniform coating may not be obtained. If the thickness of the second carbon layer exceeds the above range, the thickness of the second carbon layer is too thick, the mobility of lithium ions may be hindered, which increases resistance, and the adhesive strength to the core may be deteriorated.

When the thickness of the first carbon layer, the thickness of the second carbon layer, and the total thickness of the first carbon layer and the second carbon layer each satisfy the above range, it is possible to maintain conductive paths between the respective carbon layers, thereby suppressing the surface oxidation of the core, and to enhance the electrical conductivity of a secondary battery, thereby enhancing the capacity characteristics and cycle characteristics of the secondary battery.

In the porous silicon-carbon composite according to an embodiment of the present invention, it is preferable that the carbon layer comprising at least two carbon layers is formed such that each carbon layer is formed thinly and uniformly along the entire outer shape of the shell while the outer shape of the shell is maintained. However, it may be in the form in which some or most thereof covers the entire surface of the core. When each of the first carbon layer and the second carbon layer is formed thinly and uniformly on the surface of the core, the electrical contact between the particles contained in the negative electrode active material can be enhanced.

Meanwhile, when Raman spectroscopy is conducted for the reduced graphene oxide in the second carbon layer, the intensity ratio $I_{1,360}/I_{1,580}$ for the absorption bands of 1,360 cm$^{-1}$ and 1,580 cm$^{-1}$ may be 0.1 to 2, preferably, 0.2 to 1.5, more preferably, 0.4 to 1.5.

In addition, the content of oxygen (O) in the reduced graphene oxide in the second carbon layer may be 0.5% by weight to 15% by weight, preferably, 1% by weight to 15% by weight, more preferably, 3% by weight to 10% by weight, based on the total weight of the reduced graphene oxide. When the content of oxygen (O) in the reduced graphene oxide in the second carbon layer satisfies the above range, the degree of reduction of the graphene oxide increases, whereby reduced graphene oxide with high electrical conductivity can be achieved; thus, the effect of a secondary battery can be further enhanced.

The reduced graphene oxide in the second carbon layer may comprise at least one selected from the group consisting of lithium (Li), sodium (Na), and potassium (K) in an amount of 0.01 % by weight to 5% by weight, preferably, 0.1% by weight to 5% by weight, more preferably, 0.1% by weight to 4% by weight, based on the total weight of carbon (C) in the second carbon layer. When the reduced graphene oxide in the second carbon layer comprises at least one selected from the group consisting of lithium (Li), sodium (Na), and potassium (K) in the above content, it may be even more advantageous for achieving the desired effects.

**Physical properties of the porous silicon-carbon composite**

The molar ratio (O/Si) of oxygen (O) atoms to silicon (Si) atoms in the porous silicon-carbon composite according to an embodiment of the present invention may be preferably 0.005 to 0.60, more preferably, 0.005 to 0.40, even more preferably, 0.005 to 0.30.

When the molar ratio (O/Si) of oxygen (O) atoms to silicon (Si) atoms in the porous silicon-carbon composite is equal to, or greater than, the above lower limit, expansion and contraction due to the charging and discharging of a secondary battery may be suppressed. Thus, when the porous silicon-carbon composite is used as a negative electrode active material, it is possible to suppress the delamination of the negative electrode active material from the negative electrode current collector. In addition, when the molar ratio (O/Si) of oxygen (O) atoms to silicon (Si) atoms in the porous silicon-carbon composite is equal to, or less than, the above upper limit, sufficient discharge capacity can be secured, so that it is possible to maintain high charge and discharge characteristics.

The porous silicon-carbon composite having a core-shell structure may have an average particle diameter ($D_{50}$) of 2 $\mu$m to 20 $\mu$m. In addition, the average particle diameter ($D_{50}$) is a value measured as an average particle diameter ($D_{50}$), i.e., a particle size or median diameter when the cumulative volume is 50% in particle size distribution measurement according to a laser beam diffraction method.

Specifically, the average particle diameter ($D_{50}$) may be preferably 2 $\mu$m to 15 $\mu$m, more preferably 3 $\mu$m to 10 $\mu$m, even more preferably 3 $\mu$m to 8 $\mu$m. If the average particle diameter ($D_{50}$) is less than the above range, there is a concern that the dispersibility may be deteriorated due to the aggregation of particles of the porous silicon-carbon composite during the preparation of a negative electrode slurry (i.e., a negative electrode active material composition) using the same.

On the other hand, if $D_{50}$ exceeds the above range, the expansion of the composite particles attributed to the charging of lithium ions becomes severe, and the binding capability between the particles of the composite and the binding capability between the particles and the current collector are deteriorated as charging and discharging are repeated, so that the lifespan characteristics may be significantly reduced. In addition, there is a concern that the activity may be deteriorated due to a decrease in the specific surface area. More specifically, in view of the remarkable improvement effect of the optimization of the average particle diameter ($D_{50}$) of the porous silicon-carbon composite, the average particle diameter ($D_{50}$) of the porous silicon-carbon composite particles may be 3 $\mu$m to 6 $\mu$m.

Meanwhile, the porous silicon-carbon composite may have a specific gravity of 1.8 g/cm$^3$ to 2.5 g/cm$^3$, preferably, 2.0 g/cm$^3$ to 2.5 g/cm$^3$, more preferably, 2.0 g/cm$^3$ to 2.4 g/cm$^3$.

The specific gravity may vary depending on the coating amount of the carbon layer. While the amount of carbon is fixed, the greater the specific gravity within the above range, the fewer pores in the composite. Therefore, when it is used as a negative electrode active material, the conductivity is enhanced, and the strength of the matrix is fortified, thereby enhancing the initial efficiency and cycle lifespan characteristics. In such an event, specific gravity may refer to particle density, density, or true density. The measurement method is as described above.

When the specific gravity of the porous silicon-carbon composite is equal to, or greater than, the above lower limit, cracks in the negative electrode active material powder due to the volume expansion and contraction of the anode active material powder during charging and discharging may be minimized, whereby the cycle deterioration may be suppressed. If the specific gravity is equal to, or less than, the above upper limit, the impregnability of an electrolyte is enhanced, which increases the utilization rate of the negative electrode active material, so that the initial charge and discharge capacity can be enhanced.

Here, specific gravity may refer to particle density, density, or true density. According to an embodiment of the present invention, for the measurement of specific gravity, for example, for the measurement of specific gravity by a dry density meter, Acupick II1340 manufactured by Shimadzu Corporation may be used as a dry density meter. The purge gas to be used may be helium gas, and the measurement may be carried out after 200 times of purge in a sample holder set at a temperature of 23°C.

Meanwhile, since the surfaces of the silicon particles in the core or the surface of the core, as well as the pores in the core, may be covered by carbon coating, the specific surface area of the porous silicon-carbon composite may vary significantly.

The porous silicon-carbon composite may have a specific surface area (Brunauer-Emmett-Teller method; BET) of 3 m$^2$/g to 50 m$^2$/g, preferably, 3 m$^2$/g to 40 m$^2$/g.

If the specific surface area of the porous silicon-carbon composite is less than the above range, the rate characteristics of a secondary battery may be deteriorated. If it exceeds the above range, conductivity may decrease, and cycle characteristics may deteriorate, and the contact area with the electrolyte may increase, thereby promoting a decomposition reaction of the electrolyte or causing a side reaction of a secondary battery.

The specific surface area can be measured by the BET method by nitrogen adsorption. For example, a specific surface area measuring device (Macsorb HM (model 1210) of MOUNTECH, Belsorp-mini II of Microtrac BEL, or the like) generally used in the art may be used.

In addition, the porous silicon-carbon composite may have an electrical conductivity of 100 S/cm to 3,000 S/cm, preferably, 400 S/cm to 3,000 S/cm, more preferably, 600 S/cm to 3,000 S/cm.

Electrical conductivity is an important factor for facilitating the movement of electrons during an electrochemical reaction. However, when a high-capacity negative electrode active material is prepared using silicon, the electrical conductivity may not reach an appropriate value. As the shell comprises a second carbon layer comprising reduced graphene oxide that has an electrical conductivity satisfying the above range, there is an effect of enhancing the electrical conductivity between the shell of carbon layers and the core, and the lifespan characteristics of a secondary battery can be further improved.

In addition, when the porous silicon-carbon composite is applied to the negative electrode of a secondary battery, the electrode expansion rate of the porous silicon-carbon composite may be 60% to 150%, preferably, 60% to 100%, more preferably, 60% to 80%, based on the thickness of the electrode after one cycle of charge and discharge.

Meanwhile, the porous silicon-carbon composite may have a porosity of 1% to 40%. Specifically, the porosity of the porous silicon-carbon composite may be preferably 2% to 30%, more preferably, 5% to 25%. If the porosity of the porous silicon-carbon composite is less than the above range, it may be difficult to control the volume expansion of the negative electrode active material during charging and discharging. If it exceeds the above range, the mechanical strength is reduced due to a large number of pores present in the negative electrode active material, and there is a concern that the negative electrode active material may be collapsed in the process of manufacturing a secondary battery, for example, during the mixing of the negative electrode active material slurry and the rolling step after coating.

The porous silicon-carbon composite may have an internal porosity of 1% to 40%. Specifically, the internal porosity of the porous silicon-carbon composite may be preferably 2% to 30%, more preferably, 5% to 25%.

The porous silicon-carbon composite may have an inner porosity of 1% to 30%, preferably, 2% to 30%, more preferably, 5% to 25%, even more preferably, 5% to 20%.

When the internal porosity and the inner porosity of the porous silicon-carbon composite each satisfy the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

The internal porosity comprises open pores on the surface and inner pores and may be defined by the following Equation 1:

Porosity (%) = pore volume per unit mass / (specific volume + pore volume per unit mass)

The measurement of the porosity is not particularly limited. Based on an embodiment of the present invention, for example, it may be measured with BELSORP (BET equipment) of BEL JAPAN using an adsorption gas such as nitrogen or by a mercury permeation method (Hg porosimeter).

However, it may be difficult in the present invention to measure an accurate value using a nitrogen adsorption method or a mercury permeation method. This may be a case where the surface of the composite is closed by a carbon coating, so that nitrogen gas does not reach the inner pores. In such a case, the difference between the value obtained from the following Equation 2 and the value obtained from the nitrogen adsorption method can be used as the inner porosity.

[Equation 2]

$$\text{Inner porosity (\%)} = \{1 - (\text{measured density} / \text{calculated density})\} \times 100$$

In addition, when the inner pores are closed by carbon coating, and nitrogen gas or mercury does not reach the inner micropores, the porosity measured by the nitrogen adsorption method may be considered to be close to open porosity.

In addition, the internal porosity may be obtained by the sum of the value obtained by the BET method or the mercury permeation method and the value of the above Equation 2. In addition, in Equation 2, the measured density may be measured using helium.

In the porous silicon-carbon composite, the volume expansion that takes place during the charging and discharging of a secondary battery is concentrated on the pores rather than the outer part of the negative electrode active material, thereby effectively controlling the volume expansion and enhancing the lifespan characteristics of a lithium secondary battery. In addition, the electrolyte can easily penetrate into the inside of the porous silicon-carbon composite to enhance the output characteristics, so that the performance of a lithium secondary battery can be further enhanced.

<Method for preparing a porous silicon-carbon composite>

The method for preparing a porous silicon-carbon composite according to an embodiment of the present invention comprises a first step of etching a silicon-based raw material powder using an etching solution containing a fluorine (F) atom-containing compound; a second step of filtering and drying the product obtained by the etching to prepare a porous silicon structure; and a third step of forming a first carbon layer on the surface of the porous silicon structure; and a fourth step of forming a second carbon layer on the surface of the first carbon layer to obtain a porous silicon-carbon composite having a core-shell structure.

The preparation method according to an embodiment of the present invention has an advantage in that mass production is possible through a continuous process with minimized steps.

Specifically, the method for preparing a porous silicon-carbon composite according to an embodiment of the present invention may comprise etching a silicon-based raw material powder using an etching solution containing a fluorine (F) atom-containing compound (first step).

The silicon-based raw material powder may comprise a powder comprising silicon capable of reacting with lithium, for example, a powder comprising two or more of silicon, silicon oxide, and silicon dioxide.

In addition, the silicon-based raw material powder may comprise a powder comprising silicon and a silicon composite oxide powder formed using a magnesium-based raw material. The formation of the silicon composite oxide powder may be carried out by, for example, using the method described in Korean Laid-open Patent Publication No. 2018-0106485.

The silicon composite oxide powder may comprise magnesium silicate.

In addition, the silicon-based raw material powder may comprise a silicon-based raw material powder on which a carbon layer is formed using chemical vapor deposition (CVD).

Specifically, once a carbon layer has been formed on the surface of the silicon-based raw material powder, the etching process of the first step may be carried out. In such a case, there may be an advantage in that uniform etching is possible, and a high yield may be obtained.

The step of forming a carbon layer may be carried out by a process similar or identical to the process of forming a carbon layer in the third step of the method for preparing a porous silicon-carbon composite to be described below.

The etching step may comprise dry etching and wet etching.

If dry etching is used, selective etching may be possible.

Silicon oxide, for example, silicon dioxide of the silicon-based raw material powder is dissolved and eluted by the etching step to thereby form pores.

In addition, pores may be considered to be formed by the following Reaction Schemes 2 and 3.

$$[\text{Reaction Scheme 2}] \qquad SiO_2 + 4HF \text{ (gas)} \rightarrow SiF_4 + 2H_2O$$

$$[\text{Reaction Scheme 3}] \qquad SiO_2 + 6HF \text{ (aq. solution)} \rightarrow H_2SiF_6 + 2H_2O$$

Pores (voids) may be formed where silicon oxide is dissolved and removed in the form of $SiF_4$ and $H_2SiF_6$ by the reaction mechanism as in the above reaction schemes.

In addition, at least a part of the silicon oxide ($SiO_x$, $0.4 \leq x \leq 2.0$) contained in the porous silicon structure may be removed depending on the degree of etching, and pores may be formed therein.

In addition, the etching process may be controlled to contain 0.3% by weight to 30% by weight, preferably, 0.3% by weight to 10% by weight, of silicon oxide based on the total weight of the porous silicon-carbon composite. The content of silicon oxide can be controlled by, for example, adjusting the concentration of the solution containing fluorine (F) atoms, etching temperature, and etching time. Further, the etching process may be controlled to adjust the molar ratio (O/Si) of oxygen (O) atoms to silicon (Si) atoms in the porous silicon-carbon composite. In addition, the degree of formation of pores may vary with the degree of etching.

The ratio of O/Si and specific surface area of the porous silicon structure upon etching may significantly vary, respectively. In addition, the specific surface area and specific gravity in the silicon structure in which pores are formed may significantly vary before and after the coating of carbon.

It is possible to obtain a porous silicon structure powder having a plurality of pores formed on the surface of the porous silicon structure particles, or on the surface and inside thereof, through the etching.

Here, etching refers to a process in which the silicon-based raw material powder is treated with an etching solution containing a fluorine (F) atom-containing compound.

A commonly used etching solution containing a fluorine atom may be used without limitation within a range that does not impair the effects of the present invention as the etching solution containing a fluorine (F) atom-containing compound.

Specifically, the fluorine (F) atom-containing compound may comprise at least one selected from the group consisting of HF, $NH_4F$, and $HF_2$. As the fluorine (F) atom-containing compound is used, the etching step may be carried out more quickly.

The etching solution may further comprise one or more acids selected from the group consisting of organic acids, sulfuric acid, hydrochloric acid, phosphoric acid, nitric acid, and chromic acid.

As the etching conditions, the stirring temperature (processing temperature) may be, for example, 10°C to 90°C, preferably, 10°C to 80°C, more preferably, 20°C to 70°C.

The porous silicon structure obtained upon the etching may comprise silicon particles that are porous.

It is possible to obtain a porous silicon structure having a plurality of pores formed on the surface, inside, or both of the porous silicon structure through the etching. Here, the porous silicon structure may have a three-dimensional (3D) structure in which two or more silicon particles are combined with each other.

In addition, it is characterized in that the average particle diameter of the porous silicon structure hardly changes by etching.

That is, the average particle diameter of the silicon-based raw material powder before etching and the average particle diameter of the porous silicon structure obtained by etching are approximately the same. The difference (change) in the average particle diameter of the silicon-based raw material powder and that of the porous silicon structure may be within about 5%.

In addition, as the silicon-based raw material powder comprises a powder comprising silicon and a silicon composite oxide powder formed using a magnesium-based raw material, when magnesium silicate is employed, the magnesium silicate can be converted into a fluorine-containing magnesium compound by the etching process. That is, a porous silicon structure comprising silicon particles and a fluorine-containing magnesium compound may be prepared. In addition, the porous silicon structure may comprise silicon particles, magnesium silicate, and a fluorine-containing magnesium compound.

For example, when the silicon composite oxide powder is etched using a fluorine (F) atom-containing compound (e.g., HF), a part of magnesium silicate is converted to a fluorine-containing magnesium compound, and pores are formed at the same time in the portion from which silicon dioxide has been eluted and removed. As a result, a porous silicon structure comprising silicon particles, magnesium silicate, and a fluorine-containing magnesium compound may be prepared.

In addition, the number of oxygen present on the surface of the porous silicon structure may be lowered by the etching. That is, it is possible to significantly lower the oxygen fraction on the surface of the porous silicon structure and to reduce the surface resistance through the etching.

In addition, as the selective etching removes a part, or a large amount, of silicon oxide, the silicon particles may comprise silicon (Si) in a very high fraction as compared with oxygen (O) on their surfaces. That is, the molar ratio of oxygen (O) atoms to silicon (Si) atoms (O/Si) present in the porous silicon structure (or porous silicon-carbon composite) may be significantly reduced. In such a case, it is possible to obtain a secondary battery having an excellent capacity retention rate, along with enhanced discharge capacity and initial efficiency.

In addition, pores or voids can be formed at the locations where silicon oxide has been removed. As a result, the specific surface area of the porous silicon structure may be increased as compared with the specific surface area of the silicon-based raw material before etching.

According to an embodiment of the present invention, physical properties such as element content and specific surface area may vary before and after the etching step. That is, physical properties such as element content and specific surface area of the silicon-based raw material before the etching step and the silicon structure after the etching step may differ.

In the method for preparing the porous silicon-carbon composite, the second step may comprise filtering and drying the product obtained by the etching to obtain a porous silicon structure. The filtration and drying step may be carried out by a commonly used method.

In the method for preparing a porous silicon-carbon composite according to an embodiment of the present invention, the third step may comprise forming a first carbon layer on the surface of the porous silicon structure.

In the third step, a first carbon layer is formed on the surface of the porous silicon structure, and the first carbon layer may enhance the electrical contact between particles. In addition, since excellent electrical conductivity may be imparted even after the electrode is expanded by charging and discharging, the performance of a secondary battery can be further enhanced.

The first carbon layer may increase the conductivity of a negative electrode active material to enhance the output characteristics and cycle characteristics of a secondary battery and may increase the stress relaxation effect when the volume of the negative electrode active material is changed.

The first carbon layer may be formed using a chemical vapor deposition method. The first carbon layer may comprise at least one selected from the group consisting of amorphous carbon, crystalline carbon, carbon nanofibers, chemical vapor graphene, and carbon nanotubes.

The step of formation of a first carbon layer may be carried out by injecting at least one selected from a compound represented by the following Formulae 1 to 3 and carrying out a reaction of the porous silicon structure obtained in the second step in a gaseous state at 400°C to 1,200°C.

[Formula 1]     $C_N H_{(2N + 2-A)}[OH]_A$

in Formula 1, N is an integer of 1 to 20, and A is 0 or 1,

[Formula 2]     $C_NH_{(2N-B)}$

in Formula 2, N is an integer of 2 to 6, and B is an integer of 0 to 2,

[Formula 3]     $C_xH_yO_z$

in Formula 3, x is an integer of 1 to 20, y is an integer of 0 to 25, and z is an integer of 0 to 5.

The compound represented by Formula 1 may be at least one selected from the group consisting of methane, ethane, propane, butane, methanol, ethanol, propanol, propanediol, and butanediol. The compound represented by Formula 2 may be at least one selected from the group consisting of ethylene, acetylene, propylene, butylene, butadiene, and cyclopentene. The compound represented by Formula 3 may be at least one selected from the group consisting of benzene, toluene, xylene, ethylbenzene, naphthalene, anthracene, and dibutyl hydroxy toluene (BHT).

In addition, carbon may be contained in at least a portion of the inside of the core, as well as the surface of the porous silicon structure, by the third step of forming a first carbon layer.

Specifically, the carbon may be present inside the pores and on the surface of the silicon particles, or the carbon may serve as a matrix while the silicon particles and the pores may be present as dispersed in the carbon matrix, or they may be present while comprising both, by the third step of forming a first carbon layer. In such a case, the characteristics of a secondary battery can be enhanced. In particular, cycle lifespan is desirably further enhanced.

Meanwhile, the carbon source gas may further comprise at least one inert gas selected from hydrogen, nitrogen, helium, and argon.

The reaction may be carried out at, for example, 400°C to 1,200°C, specifically, 500°C to 1,100°C, more specifically, 600°C to 1,000°C. The reaction time (or thermal treatment time) may be appropriately adjusted depending on the thermal treatment temperature, the pressure during the thermal treatment, the composition of the gas mixture, and the desired amount of carbon coating. For example, the reaction time may be 10 minutes to 100 hours, specifically, 30 minutes to 90 hours, more specifically, 50 minutes to 40 hours, but it is not limited thereto.

For example, as the reaction time elapses, the conductive carbon material deposited on the surface of the silicon particles is gradually grown.

In addition, in the method for preparing a porous silicon-carbon composite according to an embodiment of the present invention, a thin and uniform first carbon layer may be formed on the surface of the porous silicon structure even at a relatively low temperature through a vapor phase reaction of the carbon source gas. In addition, the detachment reaction in the carbon layer thus formed does not substantially take place.

In addition, since a carbon layer is uniformly formed over the entire surface of the porous silicon structure through the gas-phase reaction, a carbon film (carbon layer) having high crystallinity can be formed. In addition, a carbon coating may be uniformly formed on the surface of the pores in the porous silicon-carbon composite. This is preferable since the lifespan characteristics are further enhanced.

Thus, when the porous silicon-carbon composite is used as a negative electrode active material, the electrical conductivity of the negative electrode active material can be enhanced without changing the structure.

According to an embodiment of the present invention, when a reactive gas containing the carbon source gas and an inert gas is supplied to the surface of the porous silicon structure, the reactive gas penetrates into the open pores of the silicon structure, and a conductive carbon material such as one or more graphene-containing materials selected from graphene, reduced graphene oxide, and graphene oxide, a carbon nanotube, and a carbon nanofiber is grown on the surface of the silicon structure.

The structure of the graphene-containing material may be a layer, a nanosheet type, or a structure in which several flakes are mixed.

When the first carbon layer is formed uniformly over the entire surface of the porous structure, conductivity on the surface of the silicon particles can be enhanced. In addition, when the first carbon layer directly grows chemical vapor graphene, volume expansion can be efficiently suppressed. In addition, the coating of a carbon layer may reduce the chance that silicon directly meets the electrolyte, thereby reducing the formation of a solid electrolyte interphase (SEI) layer.

According to an embodiment of the present invention, since the core of the porous silicon-carbon composite is immobilized by the first carbon layer, it is possible to suppress structural collapse caused by the volume expansion of silicon and a silicon oxide compound even if a binder is not used in the preparation of a negative electrode active material composition, and it can be advantageously used in the fabrication of an electrode and a lithium secondary battery having excellent electrical conductivity and capacity characteristics by minimizing an increase in resistance.

In the method for preparing a porous silicon-carbon composite according to an embodiment of the present invention, the fourth step may comprise forming a second carbon layer on the surface of the first carbon layer to obtain a porous silicon-carbon composite having a core-shell structure.

The second carbon layer may be formed using reduced graphene oxide. The reduced graphene oxide may be formed by partially or substantially completely reducing graphene oxide. Specifically, a second carbon layer may be formed from reduced graphene oxide on the surface of the first carbon layer through a partial $\pi$-$\pi$ bond between carbon-carbon layers or a physical bond while it is dried by a spray dryer.

The formation of the second carbon layer may be carried out using one or more methods selected from a dry coating method and a liquid coating method.

Specifically, the formation of the second carbon layer may be carried out using a spray drying method among a liquid coating method. When a spray drying method is used to form a second carbon layer, it is possible to control the carbon content by adjusting the concentration of reduced graphene oxide and to carry out the coating at a low temperature unlike a chemical vapor method, resulting in the advantages that an increase in the crystal size of silicon caused during carbon coating by a chemical vapor method at a high temperature would not take place. In the formation of a second carbon layer, graphene oxide or reduced graphene oxide is dispersed in a solvent to prepare a dispersion, in which the concentration of the dispersion is 0.01 to 50 mg/ml. In the preparation method of the present invention, the temperature in the spray drying is 100°C to 500°C.

The first carbon layer may be formed using a chemical vapor deposition method, and the second carbon layer may be formed using a spray drying method.

The second carbon layer formed using the spray drying method may be thermally treated at 500°C to 1,000°C under inert gas to adjust the carbon content of the second carbon layer.

Meanwhile, according to an embodiment of the present invention, once the first carbon layer or the second carbon layer has been formed in any one or more of the third step and the fourth step, a step of pulverizing and classifying the porous silicon-carbon composite may be further carried out to have an average particle size of 2 $\mu$m to 15 $\mu$m.

For example, one or more of the porous silicon structure powders may be combined with each other to form an aggregate after the first carbon layer is formed in the third step, and the method may further comprise pulverizing and classifying the porous silicon-carbon composite such that the average particle diameter thereof is 2 $\mu$m to 15 $\mu$m. The classification may be carried out to adjust the particle size distribution of the porous silicon-carbon composite, for which dry classification, wet classification, or classification using a sieve may be used.

In the dry classification, the steps of dispersion, separation, collection (separation of solids and gases), and discharge are carried out sequentially or simultaneously using an air stream, in which pretreatment (adjustment of moisture, dispersibility, humidity, and the like) may be carried out prior to the classification so as not to decrease the classification efficiency caused by interference between particles, particle shape, airflow disturbance, velocity distribution, and influence of static electricity, and the like, to thereby adjust the moisture or oxygen concentration in the air stream used.

In addition, a desired particle size distribution may be obtained by carrying out pulverization and classification at one time. After the pulverization, it is effective to divide the coarse powder part and the granular part with a classifier or sieve.

Specifically, once the first or second carbon layer has been formed, the pulverization process may be carried out.

Alternatively, a step of performing at least one process of pulverization and classification of the porous silicon-carbon composite having a core-shell structure obtained in the fourth step may be further carried out (fifth step).

According to an embodiment of the present invention, as the porous silicon-carbon composite having a core-shell structure is subjected to pulverization and/or classification, a porous silicon-carbon composite having a particle size desired in the present invention can be obtained.

Specifically, in the fifth step, the porous silicon-carbon composite having a core-shell structure obtained in the fourth step may be classified. Alternatively, the porous silicon-carbon composite having a core-shell structure may be pulverized. Alternatively, the porous silicon-carbon composite having a core-shell structure may be pulverized and/or classified. Specifically, the porous silicon-carbon composite having a core-shell structure obtained in the fourth step may be classified and, if necessary, pulverized. Alternatively, the porous silicon-carbon composite having a core-shell structure obtained in the fourth step may be pulverized.

The pulverization and classification may be used in the same manner as the pulverization and classification described above.

In addition, the porous silicon-carbon composite may be pulverized and/or classified, specifically classified, in order to have an average particle diameter of 2 $\mu$m to 20 $\mu$m, preferably, 2 $\mu$m to 15 $\mu$m, more preferably, 3 $\mu$m to 10 $\mu$m, even more preferably, 3 $\mu$m to 8 $\mu$m.

**Negative electrode active material**

The negative electrode active material according to an embodiment of the present invention may comprise the porous silicon-carbon composite.

In addition, the negative electrode active material may further comprise a carbon-based negative electrode material, specifically, a graphite-based negative electrode material.

The negative electrode active material may be used as a mixture of the porous silicon-carbon composite and the carbon-based negative electrode material, for example, a graphite-based negative electrode material. In such an event, the electrical resistance of the negative electrode active material can be reduced, while the expansion stress involved in charging can be relieved at the same time.

The carbon-based negative electrode material may comprise, for example, at least one selected from the group consisting of natural graphite, synthetic graphite, soft carbon, hard carbon, mesocarbon, carbon fibers, carbon nanotubes, pyrolytic carbon, coke, glass carbon fibers, sintered organic high molecular compounds, and carbon black.

The content of the carbon-based negative electrode material may be 3% by weight to 50% by weight, preferably, 10% by weight to 40% by weight, more preferably, 10% by weight to 30% by weight, based on the total weight of the negative electrode active material.

In addition, if silicon particles having a crystallite size of 20 nm or less are used as mixed with graphite-based materials generally having low volume expansion, only the silicon particles do not cause large volume expansion; thus, a lithium secondary battery with excellent cycling characteristics can be obtained since the separation between the graphite material and the silicon particles hardly takes place.

**Lithium secondary battery**

According to an embodiment of the present invention, the present invention may provide a negative electrode comprising the negative electrode active material and a lithium secondary battery comprising the same.

The lithium secondary battery may comprise a positive electrode, a negative electrode, a separator interposed between the positive electrode and the negative electrode, and a non-aqueous liquid electrolyte in which a lithium salt is dissolved, wherein the negative electrode may comprise a negative electrode active material comprising the porous silicon-carbon composite. The negative electrode may be composed of a negative electrode mixture only or may be composed of a negative electrode current collector and a negative electrode mixture layer (negative electrode active material layer) supported thereon. Similarly, the positive electrode may be composed of a positive electrode mixture only or may be composed of a positive electrode current collector and a positive electrode mixture layer (positive electrode active material layer) supported thereon. In addition, the negative electrode mixture and the positive electrode mixture may each further comprise a conductive agent and a binder. Materials known in the art may be used as a material constituting the negative electrode current collector and a material constituting the positive electrode current collector. Materials known in the art may be used as a binder and a conductive material added to the negative electrode and the positive electrode. If the negative electrode is composed of a current collector and an active material layer supported thereon, the negative electrode may be prepared by coating the negative electrode active material composition comprising the porous silicon-carbon composite on the surface of the current collector and drying it.

In addition, the lithium secondary battery comprises a non-aqueous liquid electrolyte in which the non-aqueous liquid electrolyte may comprise a non-aqueous solvent and a lithium salt dissolved in the non-aqueous solvent. A solvent commonly used in the field may be used as a non-aqueous solvent. Specifically, an aprotic organic solvent may be used. Examples of the aprotic organic solvent include cyclic carbonates such as ethylene carbonate, propylene carbonate, and butylene carbonate, cyclic carboxylic acid esters such as furanone, chain carbonates such as diethyl carbonate, ethylmethyl carbonate, and dimethyl carbonate, chain ethers such as 1,2-methoxyethane, 1,2-ethoxyethane, and ethoxymethoxyethane, and cyclic ethers such as tetrahydrofuran and 2-methyltetrahydrofuran. They may be used alone or in combination of two or more.

The lithium secondary battery may comprise a non-aqueous lithium secondary battery. The negative electrode active material and the lithium secondary battery using the porous silicon-carbon composite according to an embodiment of the present invention may enhance the capacity, initial charge and discharge efficiency, and capacity retention rate thereof.

**Mode for the Invention**

Hereinafter, the present invention will be described in detail with reference to examples. The following examples are only illustrative of the present invention, and the scope of the present invention is not limited thereto.

**Example**

<Example 1>

Preparation of a porous silicon-carbon composite

First step: etching a silicon-based raw material powder using an etching solution containing a fluorine (F) atom-containing compound

50 g of a silicon oxide ($SiO_x$, x = 0.9) powder (particle size: 20 $\mu$m, D50: 5 $\mu$m) prepared by vapor deposition using a silicon powder and a silicon dioxide powder at a weight ratio of 1:1.5 was dispersed in water. While it was stirred at a speed of 300 rpm, 50 ml of an aqueous solution of 40% by weight of HF was added as an etching solution to carry out etching the silicon oxide-based raw material powder for 1 hour at room temperature.

Second step: filtering and drying the product obtained by the etching to prepare a porous silicon structure

The product obtained by the etching above was filtered and dried at 150°C for 2 hours.

Then, in order to control the particle size of the porous composite, it was pulverized using a mortar to have an average particle diameter of 5.1 $\mu$m, thereby preparing a porous silicon structure.

Third step: forming a first carbon layer on the surface of the porous silicon structure

The porous silicon structure was charged to an electric furnace by a rotary vacuum pump. The pressure in the electric furnace was reduced to 0.2 Torr. Then, argon gas was supplied at a flow rate of 0.3 liter/minute to reach normal pressure. Upon reaching normal pressure, the temperature in the electric furnace was raised to 1,000°C at a rate of 200°C/hr. Upon reaching 1,000°C, carbon coating treatment was carried out for 10 hours while ethylene gas was supplied into the electric furnace at a flow rate of 0.3 liter/minute. After the supply of ethylene gas was stopped, the inside of the electric furnace was cooled to room temperature to form a first carbon layer as shown in Table 1.

Fourth step: forming a second carbon layer on the surface of the first carbon layer to obtain a porous silicon-carbon composite having a core-shell structure

A second carbon layer was formed on the surface of the first carbon layer using a spray dryer to obtain a porous silicon-carbon composite having a core-shell structure.

Formation of the second carbon layer by a spray dryer is as follows:
The porous silicon structure with a first carbon layer obtained in the third step was added to 0.5% by weight graphene oxide dispersion at the same weight ratio to prepare a graphene oxide dispersion. While the dispersion was injected at 100 ml/minute using a metering pump, spray drying was carried out at a concentration of the dispersion of 1.0 mg/ml and a spray temperature of 250°C.

Fifth step: carrying out at least one step of pulverization and classification of the porous silicon-carbon composite having a core-shell structure

In order to control the particle size of the porous silicon-carbon composite, it was pulverized and classified to have an average particle diameter ($D_{50}$) as shown in Table 1 by a mechanical method, thereby preparing a final silicon-carbon composite having a core-shell structure.

Fabrication of a secondary battery

A negative electrode and a battery (coin cell) comprising the final porous silicon-carbon composite having a core-shell structure as a negative electrode active material were manufactured.

The negative electrode active material, Super-P as a conductive material, and polyacrylic acid were mixed at a weight ratio of 80:10:10 with water to prepare a negative electrode active material composition having a solids content of 45%.

The negative electrode active material composition was applied to a copper foil having a thickness of 18 $\mu$m and dried to prepare an electrode having a thickness of 70 $\mu$m. The copper foil coated with the electrode was punched in a circular shape having a diameter of 14 mm to prepare a negative electrode plate for a coin cell.

Meanwhile, a metallic lithium foil having a thickness of 0.3 mm was used as a positive electrode plate.

A porous polyethylene sheet having a thickness of 25 $\mu$m was used as a separator. A liquid electrolyte in which $LiPF_6$ had been dissolved at a concentration of 1 M in a mixed solvent of ethylene carbonate (EC) and diethylene carbonate (DEC) at a volume ratio of 1:1 was used as an electrolyte. The above components were employed to fabricate a coin cell (battery) having a thickness of 3.2 mm and a diameter of 20 mm.

<Example 2>

A porous silicon-carbon composite having a core-shell structure with a first carbon layer and a second carbon layer as shown in Table 1, and a coin cell (battery) using the same, were manufactured in the same manner as in Example 1, except that methane gas was used instead of ethylene gas when the first carbon layer was formed in the third step of Example 1.

<Example 3>

A porous silicon-carbon composite having a core-shell structure with a first carbon layer and a second carbon layer as shown in Table 1, and a coin cell (battery) using the same, were manufactured in the same manner as in Example 2, except that the molar ratio (O/Si) of oxygen (O) atoms to silicon (Si) atoms in the porous silicon-carbon composite was adjusted by varying the degree of etching in the first step of Example 2.

<Example 4>

A porous silicon-carbon composite having a core-shell structure with a first carbon layer and a second carbon layer as shown in Table 1, and a coin cell (battery) using the same, were manufactured in the same manner as in Example 1, except that the molar ratio (O/Si) of oxygen (O) atoms to silicon (Si) atoms in the porous silicon-carbon composite was adjusted by varying the degree of etching in the first step of Example 1.

<Example 5>

A porous silicon-carbon composite having a core-shell structure with a first carbon layer and a second carbon layer as shown in Table 1, and a coin cell (battery) using the same, were manufactured in the same manner as in Example 1, except that a silicon composite oxide powder containing magnesium silicate was used instead of the silicon oxide powder in the first step of Example 1.

<Comparative Example 1>

A porous silicon-carbon composite and a coin cell (battery) using the same were manufactured in the same manner as in Example 1, except that the silicon oxide obtained in the first step of Example 1 was not subjected to the etching process and the second step, methane gas was used instead of ethylene gas when the first carbon layer was formed in the third step, and the fourth step was not carried out.

<Comparative Example 2>

A porous silicon-carbon composite and a coin cell (battery) using the same were manufactured in the same manner as in Example 1, except that reduced graphene oxide was coated using a spray dryer to form a first carbon layer when the first carbon layer was formed in the third step of Example 1, and the fourth step was not carried out.

<Comparative Example 3>

A porous silicon-carbon composite and a coin cell (battery) using the same were manufactured in the same manner as in Example 5, except that reduced graphene oxide was coated using a spray dryer to form a first carbon layer when the first carbon layer was formed in the third step of Example 5, and the fourth step was not carried out.

<Comparative Example 4>

A porous silicon-carbon composite and a coin cell (battery) using the same were manufactured in the same manner as in Example 5, except that the fourth step in Example 5 was not carried out.

**Test Example**

**<Test Example 1> X-ray diffraction analysis**

The crystal structure of the porous silicon-carbon composite prepared in the Example was analyzed with an X-ray diffraction analyzer (Malvern Panalytical, X'Pert3).

Specifically, the applied voltage was 40 kV, and the applied current was 40 mA. The range of 2θ was 10° to 80°, and the measurement was carried out by scanning at an interval of 0.05°.

Fig. 2 shows the measurement results of an X-ray diffraction analysis of the porous silicon-carbon composite of Example 1.

Referring to Fig. 2, as can be seen from the X-ray diffraction pattern, the porous silicon-carbon composite of Example 1 had Si (111), Si (220), and Si (311) peaks at diffraction angles (2θ) of 28.1°, 47.0°, and 55.9°, respectively.

### <Test Example 2> Content of component elements

The content of each component element of oxygen (O) and carbon (C) in the porous silicon-carbon composites prepared in the Examples and Comparative Examples were analyzed.

The contents of oxygen (O) and carbon (C) were analyzed by an elemental analyzer, respectively. The content of silicon (Si) was a value calculated based on the content of oxygen (O).

Meanwhile, the contents of lithium (Li), sodium (Na), and potassium (K) contained in the reduced graphene oxide in the second carbon layer were each measured using inductively coupled plasma emission spectrometry (ICP-OES).

### <Test Example 3> Measurement of an average particle diameter of the porous silicon-carbon composite particles

The average particle diameter ($D_{50}$) of the composite particles prepared in the Examples and Comparative Examples was measured as an average value $D_{50}$, i.e., a particle size or median diameter when the cumulative volume is 50% in particle size distribution measurement according to a laser beam diffraction method.

### <Test Example 4> Raman spectroscopic analysis

The porous silicon-carbon composite prepared in Example 1 was subjected to a Raman spectroscopic analysis. Raman analysis was carried out using a micro-Raman analyzer (Renishaw, RM1000-In Via) at 2.41 eV (514 nm). The results are shown in Fig. 3.

Fig. 3(A) shows the results of a Raman spectroscopy analysis of a porous silicon structure with a first carbon layer formed. Fig. 3(B) shows the results of a Raman spectroscopy analysis of a porous silicon-carbon composite comprising two carbon layers comprising a first carbon layer and a second carbon layer.

Referring to Fig. 3(A), when a first carbon layer was formed on the surface of a porous silicon structure with pores, a Si peak appeared at 500 $cm^{-1}$, and peaks of the typical D band (1,360 $cm^{-1}$) and G band (1,580 $cm^{-1}$) appeared. In addition, when ethylene coating was applied to form the first carbon layer, the pyrolysis temperature was low, which lowered the crystallinity of carbon; thus, a peak of the 2D band almost did not appear.

Referring to Fig. 3(B), when a second carbon layer was formed on the surface of the first carbon layer, the carbon layer was thick, which reduced the Si peak intensity at 500 $cm^{-1}$; instead, the peak intensity of the crystalline 2D band (2,680 $cm^{-1}$) appeared higher and more clearly. It was understood from the above results that a second carbon layer using crystalline reduced graphene oxide was uniformly formed on the surface of the first carbon layer.

### <Test Example 5> Measurement of capacity, initial efficiency, and capacity retention rate of the lithium secondary battery

The coin cells (lithium secondary batteries) prepared in the Examples and Comparative Examples were each charged at a constant current of 0.1 C until the voltage reached 0.005 V and discharged at a constant current of 0.1 C until the voltage reached 2.0 V to measure the charge capacity (mAh/g), discharge capacity (mAh/g), and initial charge and discharge efficiency (%). The results are shown in Table 2 below.

Initial charge and discharge efficiency (%) - discharge capacity/charge capacity $\times$ 100          [Equation 3]

In addition, the coin cells prepared in the Examples and Comparative Examples were each charged and discharged once in the same manner as above and, from the second cycle, charged at a constant current of 0.5 C until the voltage reached 0.005 V and discharged at a constant current of 0.5 C until the voltage reached 2.0 V to measure the cycle characteristics (capacity retention rate upon 100 cycles, %). The results are shown in Table 2 below.

Capacity retention rate upon 100 cycles (%) = 101st discharge capacity/2nd discharge capacity $\times$ 100          [Equation 4]

The content of each element and physical properties of the porous silicon-carbon composites prepared in the Examples and Comparative Examples, and the characteristics of the secondary batteries using the same are summarized in Tables 1 and 2 below.

[Table 1]

| | | Example | | | | | Comparative Example | | | |
|---|---|---|---|---|---|---|---|---|---|---|
| | | 1 | 2 | 3 | 4 | 5 | 1 | 2 | 3 | 4 |
| Core | Content ratio Si:O (weight ratio) | 98.6:1.4 | 97.9:2.1 | 87.6:12.4 | 91.9:8.1 | 96.0:1.5 | 63:37 | 98.4:1.6 | 96.0:1.5 | 96.0:1.5 |
| | $D_{50}$ of the core ($\mu$m) | 5.5 | 5.0 | 5.8 | 5.5 | 5.8 | 5.2 | 5.5 | 5.7 | 5.8 |

| | | | Example | | | | | Comparative Example | | | |
|---|---|---|---|---|---|---|---|---|---|---|---|
| | | | 1 | 2 | 3 | 4 | 5 | 1 | 2 | 3 | 4 |
| Shell | First carbon layer | Coating type | Ethylene | Methane | Methane | Ethylene | Ethylene | Methane | Reduced graphene oxide | Reduced graphene oxide | Ethylene |
| | | $C_0 + C_1$[1] (% by weight) | 25 | 24 | 22 | 26 | 31 | 5 | 5 | 6 | 31 |
| | | Thickness (nm) | 4 | 20 | 23 | 15 | 22 | 38 | 22 | 28 | 23 |
| | | Deposition location | Core and core surface | Core and core surface | Core and core surface | Core and core surface | Core and core surface | Core and core surface | Core surface | Core surface | Core and core surface |
| | | Deposition method | CVD | CVD | CVD | CVD | CVD | CVD | Spray drying | Spray drying | CVD |
| | | Li, Na, K (% by weight) | 0 | 0 | 0 | 0 | 0 | 0 | 3 | 3 | 0 |
| | Second carbon layer | Coating type | Reduced graphene oxide | Reduced graphene oxide | Reduced graphene oxide | Reduced graphene oxide | Reduced graphene oxide | - | - | - | - |
| | | Content of carbon ($C_2$) (% by weight) | 4 | 5 | 5 | 4 | 5 | - | - | - | - |
| | | O content (% by weight) | 2.5 | 2.7 | 7 | 14.2 | 2.2 | - | - | - | - |
| | | Thickness (nm) | 10 | 8 | 9 | 11 | 8 | - | - | - | - |
| | | Deposition location | Surface of the first carbon layer | | | | | - | - | | - |
| | | Deposition method | Spray drying | Spray drying | Spray drying | Spray drying | Spray drying | - | - | - | - |
| | | Li, Na, K (% by weight) | 3 | 2 | 3 | 2 | 3 | - | - | - | - |

(continued)

| | Example | | | | | Comparative Example | | | |
|---|---|---|---|---|---|---|---|---|---|
| | 1 | 2 | 3 | 4 | 5 | 1 | 2 | 3 | 4 |
| [1] $C_O + C_1$: Sum of the amount of carbon in the core ($C_O$) and the amount of carbon in the first carbon layer ($C_1$) | | | | | | | | | |

[Table 2]

| | | Example | | | | | Comparative Example | | | |
|---|---|---|---|---|---|---|---|---|---|---|
| | | 1 | 2 | 3 | 4 | 5 | 1 | 2 | 3 | 4 |
| Porous silicon-carbon composite | Total content of carbon ($C_T$) (% by weight) | 29 | 29 | 27 | 30 | 36 | 5 | 5 | 6 | 31 |
| | Total thickness of carbon layers (nm) | 14 | 28 | 32 | 26 | 30 | 38 | 22 | 28 | 23 |
| | BET ($m^2$/g) | 6 | 8 | 9 | 6 | 8 | 10 | 13 | 11 | 13 |
| | Molar ratio O/Si | 0.08 | 0.09 | 0.47 | 0.42 | 0.06 | 1.01 | 0.1 | 0.03 | 0.04 |
| | O content (% by weight) | 2.8 | 3.2 | 14.8 | 15.2 | 2.2 | 35.1 | 4.2 | 1.5 | 1.5 |
| | Si content (% by weight) | 68.2 | 67.8 | 58.2 | 54.8 | 59.3 | | | 90 | 65 |
| | Specific gravity (g/$cm^3$) | 2.1 | 2.1 | 2.3 | 2.3 | 2.3 | 2.1 | 2.1 | 2.3 | 2.3 |
| | $D_{50}$ ($\mu$m) | 5.6 | 5.3 | 6.0 | 5.7 | 5.8 | 5.2 | 6.3 | 5.7 | 5.8 |
| | Electrical conductivity (S/cm) | 600 | 700 | 550 | 490 | 480 | - | - | 450 | 380 |
| | Porosity (%)[2] | 5 | 12 | 2 | 8 | 5 | - | 55 | 7 | 5 |
| Lithium secondary battery | Initial charge and discharge efficiency (%) | 88 | 90 | 84 | 82 | 90 | 76 | 80 | 88 | 89 |
| | Charge and discharge capacity (mAh/g) | 1,870 | 1,920 | 1,520 | 1,480 | 1,890 | 1,600 | 1,450 | 1,900 | 1,900 |
| | Electrode expansion rate (%) | 65 | 72 | 60 | 62 | 75 | 148 | 121 | 162 | 158 |
| | Capacity retention rate upon 100 cycles (%) | 87 | 91 | 87 | 86 | 85 | 62 | 55 | 48 | 45 |
| [2] Porosity: Internal porosity | | | | | | | | | | |

As can be seen from Tables 1 and 2 above, in the secondary batteries in which the porous silicon-carbon composites of Examples 1 to 4, wherein the core comprised silicon particles and the shell comprised two or more carbon layers comprising a first carbon layer and a second carbon layer, were each used as a negative electrode active material, the electrode expansion rate was low, and the initial charge and discharge efficiency, charge and discharge capacity, and capacity retention rate upon 100 cycles were all excellent, as compared with the secondary batteries of Comparative Examples 1 and 2 comprising a first carbon layer only.

Specifically, in the secondary batteries of Examples 1 and 2, the initial charge and discharge efficiency was 88 to 90%, and the charge and discharge capacity was 1,870 to 1,920 mAh/g, which were significantly excellent as compared with the secondary battery of Comparative Example 1. In particular, the secondary batteries of Examples 1 and 2 comprising a first carbon layer formed by an ethylene or methane coating and a second carbon layer formed by a reduced graphene oxide coating were all significantly excellent in terms of the initial charge and discharge efficiency, charge and discharge capacity, electrode expansion rate, and capacity retention rate upon 100 cycles, as compared with the secondary batteries of Comparative Examples 1 and 2.

Meanwhile, in the secondary battery of Comparative Example 1, in which an etching process was not carried out, and a first carbon layer alone formed by methane coating was employed, the BET of the porous silicon-carbon composite increased to 10 m$^2$/g, indicating a significant increase in the electrode expansion rate. In addition, in the secondary battery of Comparative Example 2, in which a first carbon layer alone formed by reduced graphene oxide coating was employed, along with an etching process, the initial charge and discharge efficiency and charge and discharge capacity decreased as compared with the secondary batteries of Examples 3 and 4, the electrode expansion rate also increased, and the capacity retention rate upon 100 cycles steeply decreased.

Meanwhile, it was confirmed that the results of the secondary battery varied depending on the molar ratio (O/Si) of oxygen (O) atoms to silicon (Si) atoms adjusted by the degree of etching.

For example, in the secondary batteries of Examples 1 and 2, in which a porous silicon-carbon composite with the molar ratio of O/Si adjusted to 0.08 and 0.09 by the degree of etching was used as a negative electrode active material, the overall performance of secondary batteries was enhanced as compared with the secondary batteries of Examples 3 and 4, in which a porous silicon-carbon composite with the molar ratio of O/Si adjusted to 0.47 and 0.42 was used as a negative electrode active material.

Meanwhile, when the secondary batteries of Example 5 and those of Comparative Example 3 and 4 are compared, in which a porous silicon-carbon composite prepared with a silicon composite oxide powder containing magnesium silicate as a silicon-based raw material powder was used as a negative electrode active material, the secondary battery of Example 5 had a significantly lower electrode expansion rate than that of the secondary batteries of Comparative Examples 3 and 4, and the capacity retention rate upon 100 cycles was significantly enhanced.

[Reference Numerals of the Drawings]

    1: porous silicon-carbon composite
    10: silicon particles
    20: carbon (carbon in the core)
    30: first carbon layer
    40: second carbon layer
    50: core
    60: shell
    70: pore

**Claims**

1. A porous silicon-carbon composite, which has a core-shell structure comprising silicon particles and carbon, wherein the core comprises the silicon particles, and the shell comprises two or more carbon layers comprising a first carbon layer and a second carbon layer.

2. The porous silicon-carbon composite of claim 1, wherein the first carbon layer and the second carbon layer are sequentially disposed on the core,

    the first carbon layer comprises at least one selected from the group consisting of amorphous carbon, crystalline carbon, graphite, carbon nanofibers, chemical vapor graphene, and carbon nanotubes, and
    the second carbon layer comprises reduced graphene oxide.

3. The porous silicon-carbon composite of claim 1, wherein the carbon is contained in the first carbon layer and the second carbon layer, respectively, and is contained in at least a portion of the inside of the core.

4. The porous silicon-carbon composite of claim 1, which comprises pores inside of the core,

wherein the carbon is present inside the pores and on the surface of the silicon particles, or
the carbon serves as a matrix while the silicon particles and the pores are present as dispersed in the carbon matrix, or
they are present while comprising both.

5. The porous silicon-carbon composite of claim 1, wherein the total content of carbon ($C_T$) in the porous silicon-carbon composite is 20% by weight to 60% by weight based on the total weight of the silicon-carbon composite.

6. The porous silicon-carbon composite of claim 5, wherein the sum of the amount of carbon in the core ($C_O$) and the amount of carbon in the first carbon layer ($C_1$) ($C_O + C_1$) is 20% by weight to 50% by weight based on the total weight of the silicon-carbon composite.

7. The porous silicon-carbon composite of claim 5, wherein the amount of carbon in the second carbon layer ($C_2$) is 0.5% by weight to 15% by weight based on the total weight of the silicon-carbon composite.

8. The porous silicon-carbon composite of claim 2, wherein the content of oxygen (O) in the reduced graphene oxide in the second carbon layer is 0.5% by weight to 15% by weight based on the total weight of the reduced graphene oxide.

9. The porous silicon-carbon composite of claim 2, wherein the reduced graphene oxide in the second carbon layer comprises at least one selected from the group consisting of lithium (Li), sodium (Na), and potassium (K) in an amount of 0.01% by weight to 5% by weight based on the total weight of carbon (C) in the second carbon layer.

10. The porous silicon-carbon composite of claim 2, wherein when Raman spectroscopy is conducted for the reduced graphene oxide in the second carbon layer, the intensity ratio $I_{1,360}/I_{1,580}$ for the absorption bands of 1,360 cm$^{-1}$ and 1,580 cm$^{-1}$ is 0.1 to 2.

11. The porous silicon-carbon composite of claim 1, wherein the molar ratio (O/Si) of oxygen (O) atoms to silicon (Si) atoms in the porous silicon-carbon composite is 0.005 to 0.60.

12. The porous silicon-carbon composite of claim 1, wherein the porous silicon-carbon composite comprises a silicon aggregate in which the silicon particles in the core are combined with each other.

13. The porous silicon-carbon composite of claim 1, wherein the core further comprises a magnesium compound, and the magnesium compound comprises a fluorine-containing magnesium compound, magnesium silicate, or a mixture thereof.

14. A method for preparing the porous silicon-carbon composite of claim 1, which comprises:

    a first step of etching a silicon-based raw material powder using an etching solution containing a fluorine (F) atom-containing compound;
    a second step of filtering and drying the product obtained by the etching to prepare a porous silicon structure;
    a third step of forming a first carbon layer on the surface of the porous silicon structure; and
    a fourth step of forming a second carbon layer on the surface of the first carbon layer to obtain a porous silicon-carbon composite having a core-shell structure.

15. The method for preparing the porous silicon-carbon composite according to claim 14, wherein the first carbon layer is formed using a chemical vapor deposition (CVD) method, and the second carbon layer is formed using a liquid coating method.

16. A negative electrode active material, which comprises the porous silicon-carbon composite of claim 1.

17. A lithium secondary battery, which comprises the negative electrode active material of claim 16.

[Fig. 1]

[Fig. 2]

[Fig. 3]

<div align="center">**INTERNATIONAL SEARCH REPORT**</div>

| International application No. |
| --- |
| **PCT/KR2022/019538** |

**A.    CLASSIFICATION OF SUBJECT MATTER**

**H01M 4/36**(2006.01)i; **H01M 4/38**(2006.01)i; **H01M 4/587**(2010.01)i; **H01M 4/62**(2006.01)i; **C01B 33/02**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); C01B 32/05(2017.01); C01B 32/10(2017.01); C01B 32/182(2017.01); H01M 10/052(2010.01); H01M 4/134(2010.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 규소(silicon), 탄소(carbon), 코어-쉘(core-shell), 기공(pore), 층(layer), 환원 (reduction), 산화 그래핀(graphene oxide), 리튬(lithium), 나트륨(sodium), 칼륨(potassium), 마그네슘(magnesium), 라만 분 광법(Raman spectroscopy), 에칭(etching)

**C.    DOCUMENTS CONSIDERED TO BE RELEVANT**

| Category* | Citation of document, with indication, where appropriate, of the relevant passages | Relevant to claim No. |
| --- | --- | --- |
| X<br><br>Y | CN 112786854 A (TSINGHUA SHENZHEN INTERNATIONAL GRADUATE SCHOOL) 11 May 2021 (2021-05-11)<br>    See paragraphs [0002], [0026]-[0062] and [0091]; and figures 1 and 2. | 1,3,16,17<br><br>2,4-15 |
| Y | KR 10-1767393 B1 (KOREA INSTITUTE OF GEOSCIENCE AND MINERAL RESOURCES(KIGAM)) 11 August 2017 (2017-08-11)<br>    See paragraphs [0049], [0063], [0071], [0076], [0079]-[0091], [0101], [0109], [0117] and [0139]. | 2,5-10 |
| Y | KR 10-2017-0036381 A (LG CHEM, LTD.) 03 April 2017 (2017-04-03)<br>    See paragraphs [0040], [0043], [0047], [0048], [0067], [0071] and [0074]-[0077]. | 4,11,12,14,15 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 March 2023** | **10 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/019538**

**C.    DOCUMENTS CONSIDERED TO BE RELEVANT**

| Category* | Citation of document, with indication, where appropriate, of the relevant passages | Relevant to claim No. |
|---|---|---|
| Y | KR 10-1832663 B1 (INDUSTRY-ACADEMIC COOPERATION FOUNDATION, YONSEI UNIVERSITY) 26 February 2018 (2018-02-26)<br>See paragraphs [0010], [0035]-[0038] and [0082]-[0089]. | 9,10 |
| Y | KR 10-2019-0116011 A (DAE JOO ELECTRONIC MATERIALS CO., LTD.) 14 October 2019 (2019-10-14)<br>See paragraph [0017]. | 13 |

Form PCT/ISA/210 (second sheet) (July 2022)

# EP 4 443 552 A1

<table>
<tr><td colspan="2" align="center"><b>INTERNATIONAL SEARCH REPORT</b><br/><b>Information on patent family members</b></td><td colspan="2">International application No.<br/><br/><b>PCT/KR2022/019538</b></td></tr>
</table>

| Patent document cited in search report | | | Publication date (day/month/year) | Patent family member(s) | | | Publication date (day/month/year) |
|---|---|---|---|---|---|---|---|
| CN | 112786854 | A | 11 May 2021 | None | | | |
| KR | 10-1767393 | B1 | 11 August 2017 | CN | 108417782 | A | 17 August 2018 |
| | | | | US | 11362326 | B2 | 14 June 2022 |
| | | | | US | 2019-0355985 | A1 | 21 November 2019 |
| | | | | WO | 2018-147508 | A1 | 16 August 2018 |
| KR | 10-2017-0036381 | A | 03 April 2017 | CN | 107636867 | A | 26 January 2018 |
| | | | | EP | 3355389 | A1 | 01 August 2018 |
| | | | | JP | 2018-523898 | A | 23 August 2018 |
| | | | | JP | 6727667 | B2 | 22 July 2020 |
| | | | | KR | 10-1981609 | B1 | 24 May 2019 |
| | | | | PL | 3355389 | T3 | 17 May 2021 |
| | | | | US | 2018-0151874 | A1 | 31 May 2018 |
| | | | | US | 2022-0255069 | A1 | 11 August 2022 |
| | | | | WO | 2017-052281 | A1 | 30 March 2017 |
| KR | 10-1832663 | B1 | 26 February 2018 | None | | | |
| KR | 10-2019-0116011 | A | 14 October 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4393610 B
- JP 2016502253 A

- KR 20180106485